# EUROPÄISCHE PATENTSCHRIFT

(11) **EP 2 370 373 B1**
(45) Veröffentlichungstag und Bekanntmachung des Hinweises auf die Patenterteilung: **15.06.2016**
(21) Anmeldenummer: 09796616.2
(22) Anmeldetag: 27.11.2009
(51) Int. Cl.: C04B 20/00, C04B 28/00

(54) **CO2-EMISSIONEN-FREIER BAUSTOFF AUS CO2**
CO2 EMISSION-FREE CONSTRUCTION MATERIAL MADE OF CO2
MATERIAUX DE CONSTRUCTION SANS EMISSIONS DE CO2, OBTENUS A PARTIR DE CO2

(30) Priorität: 27.11.2008 DE 202008015775 U
(43) Veröffentlichungstag der Anmeldung: 05.10.2011
(73) Patentinhaber: Kuse, Kolja, 81925 München (DE)
(72) Erfinder: Kuse, Kolja, 81925 München (DE)
(86) Internationale Anmeldenummer: PCT/EP2009/008497
(87) Internationale Veröffentlichungsnummer: WO 2010/060645

(56) Entgegenhaltungen:
- WO-A2-2005/082434
- DE-A1-102007 016 201

## Beschreibung

Die vorliegende Erfindung bezieht sich auf ein Verfahrung zur CO₂ - Emissionen neutralen bzw. freien Herstellung von Baumaterialien. In einem zweiten Schritt soll bei der für die Baustoffherstellung benötigten Energieerzeugung CO₂ zusätzlich aus der Atmosphäre entnommen und dauerhaft in den Baumaterialien gebunden werden. Das Verfahren wird basierend auf einem neuen, bisher unbekannten Stofffluss beschrieben. Vor dem Hintergrund der mittlerweile unbestrittenen Klimaerwärmung ist es wichtig insbesondere solche Prozesse zu optimieren, die viel Herstellungs-Energie benötigen. Eine große Energiesenke ist die Herstellung von gleichzeitig druck- und zugstabilen Materialien wie Beton, Stahlbeton, Stahl, Glas und Aluminium. Ohne diese Materialien sind industrielle Fertigung von notwendigen Einrichtungen und Konsumgütern eines modernen Lebensstandards wie Gebäude, Fahrzeuge und Maschinen derzeit nicht denkbar. Die Herstellung dieser Materialien, die vom Menschen künstlich geschaffen werden, benötigen jedoch große Mengen an Energie, die derzeit in ausreichendem Maß nur dadurch gewonnen werden kann, dass fossile Brennstoffe diese Energie liefern. Dabei werden große Mengen an CO₂ freigesetzt, die auf Dauer den Klimawandel durch Aufheizung der Atmosphäre derart beschleunigen, dass das Klimasystem droht unerträgliche Lebensumstände auf dem Planten Erde zu erzeugen oder sogar ganz zu kippen, wenn der CO₂ - Ausstoß nicht gebremst und auf Dauer quasi auf Null reduziert wird, bzw. ab einem gewissen Konzentrationsgrad an CO₂ in der Atmosphäre eine Reduktion von CO₂ aus der Atmosphäre notwendig wird, um z.B. dem Klimaziel nahe zu kommen, die Erwärmung bis zum Jahr 2100 auf 2°C zu begrenzen und danach idealerweise schrittweise wieder auf den vorindustriellen Level zurückzufahren.

Die vorliegende Erfindung schlägt deshalb ein Verfahren vor, um druck- und zugstabile Materialien CO₂ - neutral herzustellen und durch deren Herstellung ggfls. CO₂ über lange Zeiträume der Atmosphäre dauerhaft zu entziehen. In jüngster Zeit ist es gelungen CO₂ aus dem Rauchabgas in mit fossilen Kraftstoffen betriebenen Kraftwerken abzuscheiden. Dieses CO₂ wird zum Beispiel in Gefäße mit Salzwasser eingeleitet, in dem Algenwachstum mit Hilfe der Photosynthese angeregt wird. Die Algen binden den Kohlenstoff sehr schnell, schneller als in Luft wachsende Pflanzen und setzen dabei wertvollen Sauerstoff frei. Aus den Algen ist es ohne weiteres möglich Öl zu gewinnen.

Der Kern der Erfindung beruht auf der Idee dieses Öl als Rohstoff zu nutzen, um Kunststofffasern herzustellen. Diese Kunststofffasern können solcher Natur sein, dass diese unter anderem zu Kohlefasern oder Carbonfasern oder Aramidfasern weiterverarbeitet werden können. Die für die Abscheidung des CO₂, die Herstellung der Fasern und der benötigen druckstabielen Materialkomponenten wie z.B. Naturstein und die anderen zur Herstellung des Algenöls notwendigen Energien werden ans den in konventionellen Kraftwerken verbrannten fossilen und/oder regenerativen Brennstoffen wie Biodiesel und auch anderen regenerativen Energiequellen wie Sonne-, Wind-und Wasserkraftwerken gewonnen, wobei ein Überschuss an Energie zur sonstigen generellen Stromversorgung beiträgt. Der Kohlenstoff, der zuvor das CO_{2 -} Problem verursacht hat, ist jetzt in dem Baumaterial Kohlefaser oder Aramidfaser gebunden. Die CO₂ - neutral hergestellten zugstabilen Cerbonfasem und Aramidfasem können in Zusammenarbeit mit druckstabilen Materialien wie Naturstein die derzeit verwendeten zug- und druckstabilen herkömmlichen Baustoffe wie Beton, Stahl und Aluminium ersetzen. Durch Kombination der zugstabilen Faser mit druckstabilen Werkstoffen, die die Natur in Form von Naturstein in unbegrenzten Mengen ohne großen Energieaufwand liefert, wird der Anteil an benötigter Kohlefaser oder Aramidfaser signifikant gesenkt. Der entstehende Baustoff basiert nunmehr nur auf den Primär-Materialien Salzwasser, Kohlenstoff und Naturstein, die Energiequelle für die Produktion des Baustoffs ist mittelfristig fossiler Brennstoff und die Sonne und langfristig regenerative Brennstoff - wie Biodiesel - und die Sonne (z.B. mit Hilfe von Parabolspiegelkraftwerken), denn langfristig kann auf diese Weise wegen der entstehenden Energieersparnis durch den Ersatz von Stahl, Alu und Beton durch Faserstabilisierten Naturstein ein Zustand hergestellt werden, dass langfristig auf die Primärenergie der fossilen Brennstoffe verzichtet werden kann. Durch das Verbrennen von regenerativem Brennstoff wird dem Algenwachstum CO₂ zugeführt, welches sich zuvor in der Atmosphäre befunden hat und nun auf Basis des Algenöls zur Carbonfaser und somit zum essentiellen Baustoff wird. Diese Prozesskette führt letztlich zur Reduktion von CO₂ aus der Atmosphäre, welches der Atmosphäre dauerhaft entzogen wird, da das Baumaterial ein Festkörper ist, der sich in Form der Carbonfaser nicht zersetzt, sondern auch nach Entsorgung wegen seiner Kohlebestandteile dauerhaft stabil bleibt. Im End - Stadium des Prozesses wird der Atmosphäre bei der Energiegewinnung nur noch so viel CO₂ mit Hilfe von Biodieselkraftwerken und CO₂ - Abscheidung entzogen, wie nötig. Am Ende dieses möglicherweise Jahrzehnte oder gar Jahrhunderte dauernden Prozesses können die diese Prozesskette treibenden Energiequellen am Ende durch rein regenerative Energiequellen aus Sonnenenergie mit Hilfe der Parabolspiegeltechnik ersetzt werden. Auch der für die Carbonfaser-Herstellung notwendige Pyrolyse-Prozess kann mit den dafür notwendigen hohen Temperaturen bis über 1400 **°**C durch Bündelung von Sonnenenergie mit Parabolspiegeltechnik versorgt werden. Auf diese Weise kann eine auf CO₂ - neutralen Bilanzen bzw. CO₂ - Negativbilanzen basierte Industrie entstehen, ohne dass auf die notwendigen Bau- und Konstruktionsmaterialien verzichtet werden muss. Das Baumaterial bzw. ein Teil davon entsteht aus dem in der Atmosphäre schädlich wirkenden Kohlenstoff selbst und wird im Baumaterial dauerhaft gebunden, welches nach Gebrauch unterirdisch dauerhaft gebunden entsorgt oder entsprechend recycelt wird.

Eine der vielen möglichen Ausführungen der Erfindung beschreibt eine Stoff-Kette bzw. einen Stoffketten-Kreislauf mit einer Anordnung eines mit konventionellem Fossilbrennstoff (z.B. Kohlekraftwerk) befeuerten Kraftwerks (1), dessen Rauchgasabscheider (2) das CO₂ (3) abscheiden und in einen Salzwassertank (4) einleiten, in dem mit Hilfe des Sonnenlichts (5) Algen (6) wachsen, die gesammelt werden. Aus den Algen (6) wird in Öl-Pressen (7) Pflanzenöl (8) gewonnen, welches in Produktionsanlagen (9) zuerst zu. Kunststofffasern und dann durch Pyrolyse mit Hilfe von Sonnenstrahlenbündelung zu zu Kohlefasem (10) verarbeitet wird. Aus den Kohlenstoffasern werden Gewebefasermatten (11) hergestellt. Die hote Temperatur für den Pyrolyseprozess zur Carbonisierung der Fasern liefert das gebündelte Sonnenlicht (5) direkt mit Hilfe von Parabolspiegeltechnik. Diese Kohlefaser- oder Carbonfasermatten (11) werden mit energiearm zu gewinnenden druckstabilen Materialien wie Naturstein (12) zu hybriden Bau- und Konstruktionsmaterialien kombiniert. Der Naturstein wird mit Hilfe von Epoxyd-Harz, welches ebenfalls aus dem Algenöl gewonnen wird, mit den Fasern beschichtet und bildet somit ein CO₂ - neutral gewonnenes Baumaterial, aus dem zum Beispiel weitere Kraftwerke (1), Gebäude und Fahrzeuge gebaut werden können. Die für das Schneiden des Steins und die Herstelhungsprozesse für Harz und Fasern benötigte Energie liefert das Kraftwerk (1). Das konventionelle Kraftwerk (1) wird schrittweise durch Kraftwerke, die anstatt fossiler Brennstoffe mit nachwachsenden pflanzlichen Brennstoffen befeuert werden, ersetzt, um mit Hilfe der CO₂ Abscheidung den in den nachwachsenden Brennstoffen gebundenen Kohlenstoff, der zuvor in Form von CO₂ aus der Atmosphäre durch dasPflanzenwachstum gewonnen wurde, um es nunmehr für die Herstellung der Kohlefasern mit Hilfe des Algenwachstums zu nutzen. Somit entsteht über mehrere Prozessschritte aus dem CO₂ der Atmosphäre hochwertiger zugstabiler Baustoff in dem der aus CO₂ stammende Kohlenstoff dauerhaft gebunden ist.

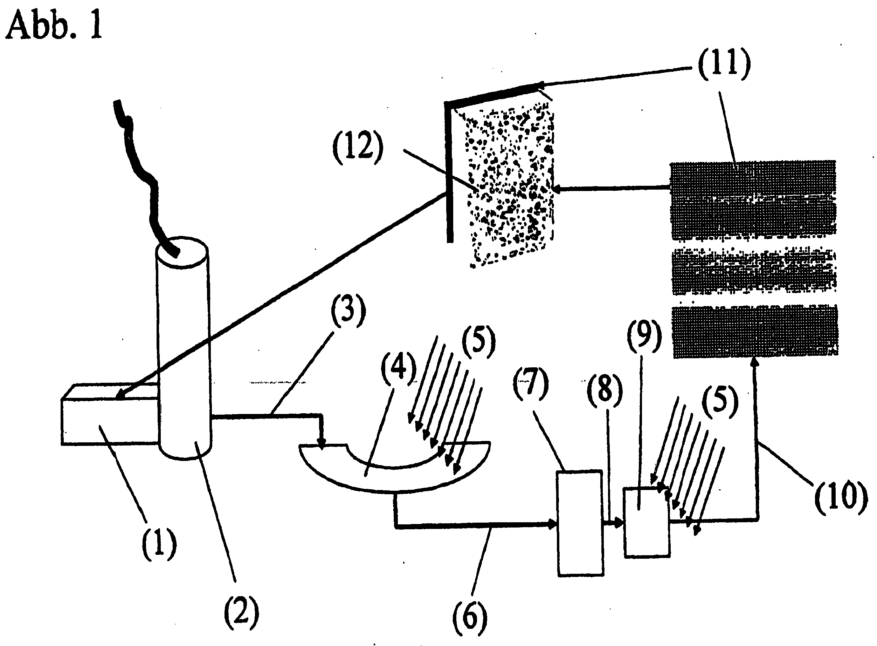

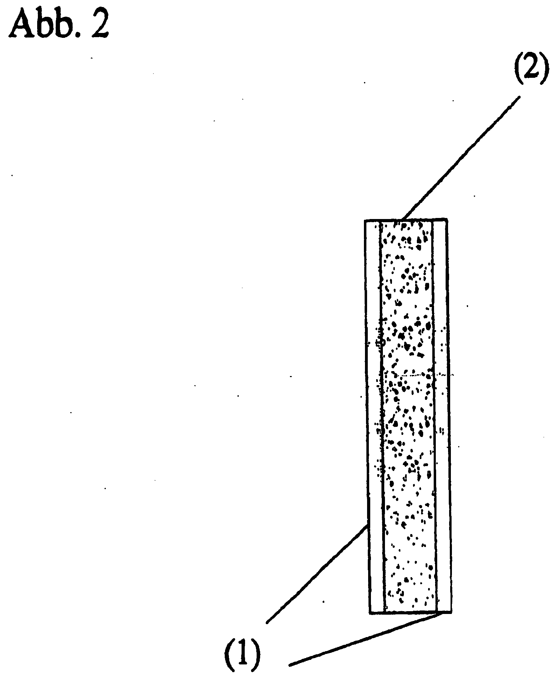

Abb. 2 zeigt den Querschnitt einer mit auf Algenol-Basis hergestellten Kunststoffasern (1) stabilisierten Naturstcinplatte (2) für den Bau von Gebäuden, Fahrzeugen, Schiffen und sonstigen Industrie- und Konsurngütern mit Hilfe des Stabilisierungsverfabrens von Naturstein durch Fasermaterial, auch als "Stone Composite Technologie" bzw. CFS "Carbonfaser-Stein" bekannt, wenn der Naturstein mit Kohlefasern vorgespannt beschichtet ist.

## Patentansprüche

1. Baustoff, beziehungsweise Bau- und Konstruktionsmaterialien aus Kunststoffasern oder einer Kombination von Kunststofffasern mit druckstabilem Material,
**dadurch gekennzeichnet, daß** die Kunststoffasern aus aus Algenöl gewonnenem Grund-Material bestehen und aus diesen Kunststoffasern zugstabile und/oder druckstabile Bau- und Konstruktionsmaterialien hergestellt werden.

2. Baustoff nach Anspruch 1, **dadurch gekennzeichnet, daß** die Fasern zu Carbonfasern oder Aramidfasern weiterverarbeitet werden.

3. Baustoff nach Anspruch 1 und 2, **dadurch gekennzeichnet, daß** die Carbonfasern mit druckstabilem Material zu Hybridmaterialien kombiniert werden.

4. Baustoff nach Anspruch 1 bis 3, **dadurch gekennzeichnet, daß** diese druckstabilen Materialien vorzugsweise aus Naturstein oder Kunststein oder Beton oder sonstigen druckstabilen und energiearm zu gewinnenden Materialien bestehen.

5. Baustoff nach Anspruch 1 bis 4, **dadurch gekennzeichnet, daß** die druckstabilen Materialien mit Hilfe der Fasern und Epoxidharz beschichtet, stabilisiert und ggfls. vorgespannt werden.

6. Baustoff nach Anspruch 1 bis 5, **dadurch gekennzeichnet, daß** am Ende der Verarbeitungskette ein CO₂ - Emissionen armer oder ein CO₂ - Emissionen freier Baustoff entsteht, der mechanisch gleich- oder höherwertig zu CO₂ - Emissionen intensiven und herkömmlichen Baustoffen wie Stahl, Aluminium und Beton ist.

7. Baustoff nach Anspruch 1 bis 6, **dadurch gekennzeichnet, daß** die für die Herstellung der Carbonfaser benötigten hohen Pyrolyse-Temperaturen durch Bündelung von Sonnenstrahlen erzeugt werden.

8. Baustoff nach Anspruch 1 bis 7, **dadurch gekennzeichnet, daß** bei der Herstellung der Baustoffe durch deren Produktionsprozesse insgesamt bzw. in Summe mehr in der Atmosphäre vorhandenes CO₂ gebunden wird, als durch deren Herstellungsprozesse in die Atmosphäre freigesetzt wird.

9. Baustoff nach Anspruch 1 bis 8, **dadurch gekennzeichnet, dass** der Baustoff, in welchem der Kohlenstoff dauerhaft gebunden ist, nach Gebrauch dauerhaft unterirdisch entsorgt oder recycled wird.

## Claims

1. Building and construction material made from synthetic fibers or a combination of synthetic fibers with pressure resistant material,
**characterized in that** the synthetic fibers consist out of a base material being won from algal oil and **in that** tensile and/or pressure resistant building and construction materials are being made from the synthetic fibers.

2. Building material according to claim 1 **characterized in that** the fibers are being processed to become carbon fibers or aramide fibers.

3. Building material according to claim 1 and 2 **characterized in that** the carbon fibers are being combined with pressure stable material to become hybrid materials.

4. Building material according to claim 1 to 3 **characterized in that** such pressure stable materials consist preferably out of natural stone or artificial stone or concrete or other pressure stable materials which can be won with low energy input.

5. Building material according to claim 1 to 4 **characterized in that** the pressure stable materials are being coated, stablized and prestressed with the help of the fibers and exoxy resin.

6. Building material according to claim 1 to 5 **characterized in that** at the end oft he process chain a low CO₂-emissions or CO₂-emissions free building material is being formed which is mechanically equivalent or better than CO₂-emissions intensive and common building material like steel, aluminum and concrete.

7. Building material according to claim 1 to 6 **characterized in that** the high pyrolysis-temperatures needed for the carbon fiber production is being generarted through bundling of sun rays.

8. Building material according to claim 1 to 7 **characterized in that** in total more CO₂ is being bound from atmosphere through the production processes of the building material than being released into the atmosphere by their production processes.

9. Building material according to claim 1 to 8 **characterized in that** the building material, in which the carbon is sustainably bound, is being sustainably stored underground or recycled.

## Revendications

1. Matériau de construction créé de fibres synthétiques ou d'une combinaison de fibres synthétiques et de matériau stable en pression,
characterisée en ce que les fibres synthétiques se constituent d'un matériau à base d'huile d'algues et que ces fibres synthétiques sont utilisées pour la production de matériaux de construction stables en tension et/ou en pression.

2. Matériau de construction selon revendication 1, **caractérisé en ce que** les fibres seront transformées en fibres de carbone ou en fibres d'aramides.

3. Matériau de construction selon revendications 1 à 2, **caractérisé en ce que** les fibres de carbone sont combinées avec des matériaux stables en pression pour former des matériaux hybrides.

4. Matériau de construction selon revendications 1 à 3, **caractérisé en ce que** ces matériaux stables en pression se constituent de pierre naturelle ou artificielle ou de béton ou d'autres matériaux produits avec un minimum d'énergie.

5. Matériau de construction selon revendications 1 à 4, **caractérisé en ce que** les matériaux stables en pression sont enduits, stabilisés et précontraints avec l'apport de fibres et de résine Epoxy.

6. Matériau de construction selon revendications 1 à 5, **caractérisé en ce qu'**à la fin de la chaine du procédé un matériau de construction est créé avec un niveau bas voire nul concernant les émissions de CO₂, matériau qui est comparable ou plus performant concernant les qualités mécaniques que les matériaux de construction à haut niveau d'émissions de CO₂ tels que l'acier, l'aluminium et le béton.

7. Matériau de construction selon revendications 1 à 6, **caractérisé en ce que** les hautes températures du procédé de pyrolyse pour la production de la fibre de carbone sont obtenues par concentration des rayons solaires.

8. Matériau de construction selon revendications 1 à 7, **caractérisé en ce que** la production des matériaux de construction va fixer au final plus de C02 qu'il ne va en libérer dans l'atmosphère par son procédé de fabrication.

9. Matériau de construction selon revendications 1 à 8, **caractérisé en ce que** le matériau de construction auquel le carbone est fixé durablement est, après utilisation, soit enfoui durablement sous terre soit recyclé.
